# EUROPEAN PATENT APPLICATION

(11) **EP 3 571 927 A1**
(43) Date of publication of application: **27.11.2019**
(21) Application number: 18174142.2
(22) Date of filing: 24.05.2018
(51) Int. Cl.: A01K 1/03, A01K 1/00, A01K 1/01, A01K 13/00, B08B 9/093

(54) **MULTIFUNCTIONAL PET HOUSE**

(71) Applicant: Liu, Chun-Chien, 50353 Changhua (TW)
(72) Inventor: Liu, Chun-Chien, 50353 Changhua (TW)
(74) Representative: Brown, Michael Stanley

(57) **Abstract**

A multifunctional pet house includes a house body having an electromechanical room and a pet room, the electromechanical room has a water collecting tank, an electric pump and a bottom rotating jet rod, above the pet room is provided a top rotating jet rod, after raising the pressure and speed of water in the water collection tank through the electric pump, nozzles of the top and bottom rotating jet rods spray water on the pet room, so as to remove the dirt attached to the surface of the pet room. Then, the sewage finally flows into the water collecting tank for recycling, after a certain period of continuous cleaning, the sewage in the water collecting tank is discharged from the pet room, then repeat the same cleaning process twice to thoroughly clean the pet room. Moreover, with the ventilator and warm-keeping device, it can provide good living environment for pets.

## Description

### BACKGROUND OF THE INVENTION

### 1. Field of the Invention

The present invention relates to a pet house, and more particularly to a pet house with automatic cleaning, ventilation and warm-keeping functions.

### 2. Description of the Prior Art

For dogs, cats and other pets, cages are not only a shelter from wind and rain, and a place to eat and sleep, but also is a safe haven for them. So when a pet feels nervous or anxious, it can be satisfied and comforted by hiding in its cage. In addition, the cage is also the key for pets to learn to follow the rules. Training in the cage can cultivate a stable personality of a pet and enable him to learn many good rules. It is a basic training that can promote the harmonious relationship between people and pets. So cages are not necessarily the iron cages we remember for pets.

For owners who keep their pets outside the house for a long time, the animal protection law stipulates that shelter from wind and rain is the most basic requirement. A shelter suitable for pet's life should also be secure, clean, well ventilated, drained, suitable and adequate for shelter, lighting and temperature. Of course, it must not exceed the number of hours required to close a pet in a cage or an unreasonable cage to cause pain to the pet, etc.

Generally, there is no cleaning device in pet cage/pet house, so the cleaning of pet cage/house, including cleaning pet excreta, can only be done by the owner himself. Since cleaning pet cage/pet house is time-consuming, laborious and painstaking work, resulting in a heavy burden on the owners' mental, physical strength and time, it is difficult to clean pet cage/pet house on a regular basis. As a result, the pet cage/pet house is often unclean, which is not only unable to provide clean living space for pets, but also has a direct impact on the living environment of owners and neighbors due to hygiene problems.

### SUMMARY OF THE INVENTION

The primary object of the present invention is to provide a multifunctional pet house that can automatically clean pet activity space and sewage, save labor and time.

Another object of the present invention is to provide a multifunctional pet house that can provide a good ventilation and warm living environment for pets, and reduce interference from pet calls.

To achieve the above objects, the multifunctional pet house comprising a house body having an electromechanical room and a pet room located above the electromechanical room, the pet room being provided with a floor and a gate assembly, the floor being defined with a hole in the center thereof, which is normally covered by a loadable hole cover that is removed while cleaning the pet room; an electronic controller disposed on the house body; an electric pump disposed in the electromechanical room and operated under the control of the electronic controller and provided with a motor for generating rotating power and a pump connected to the kinetic energy of the motor, the pump being defined with a water inlet and a water outlet; and a washing device having a rotary disk, a bottom rotating jet rod and a water collecting tank, the rotary disk being rotatably disposed in the electromechanical room and located below the hole in the floor, the bottom rotating jet rod being fixed to the rotary disk and connected to the water outlet of the pump via a high pressure pipe, the bottom rotating jet rod being defined with several nozzles which can respectively spray water toward the surface of the pet room, the water collecting tank being arranged below the rotary disc and defined with an inlet connected to a water source, a discharge outlet connected to the water inlet of the pump and an outlet for discharging sewage, the water collecting tank controls water intake and drainage by a water level sensor, an inlet solenoid valve and an outlet solenoid valve, the electronic controller controls the opening and closing of the inlet solenoid valve and the outlet solenoid valve according to the signal given by the water level sensor, which makes the water flow into or out of the water collecting tank. When starting the cleaning procedure, the inlet solenoid valve opens and the water from the water source begins to flow into the water collecting tank, when the water level sensor indicates that the water level of the water collecting tank rises to the predetermined water level, the inlet solenoid valve closes and the motor starts to run, and the pump pumps the water flowing from the water collecting tank to the high pressure pipe after raising the pressure and velocity, so as to make the high pressure water reach the bottom rotating jet rod, so as to make the rotary disc rotate synchronously with the bottom rotating jet rod driven by water pressure, the high pressure water accelerated by the nozzles forms a jet, which is sprayed on the surface of the pet room, so as to remove the dirt attached to the surface of the pet room , then, the sewage flows along the floor into the rotary disc via the hole, and finally flows into the water collecting tank for recycling, thus, after a certain period of continuous cleaning with the water from the water collecting tank, the electric pump stops running and the outlet solenoid valve is opened, so that the sewage in the water collecting tank will be discharged from a drain pipe that is connected to the outlet.

In another embodiment, the washing device is further provided with a top rotating jet rod that is connected to the high pressure pipe and is defined with several nozzles respectively spray water toward the surface of the pet room.

In another embodiment, the house body includes a baffle, the top and bottom sides of the baffle are supported on two sliding rails that are fixed to the outer side of the pet room, respectively, so that the baffle is slidably kept on the outer side of the pet room, when the baffle slips forward to the end, it is turned to the front of the gate assembly to cover the gate assembly, a packing which is mounted around the front of the pet room form an airtight between the gate assembly and a contact surface of the baffle.

In another embodiment, the pet house includes a heating device arranged on the inflow side of the pump, through which the water flowing into the pump is heated, and the pet room is cleaned by hot water.

In another embodiment of the present invention, the gate assembly consists of a left gate bar and a right gate bar, a top of the left gate bar or the right gate bar is hinged to the house body, which allows the pet to push and open the left gate bar or the right gate bar with its own strength and free access to the pet room.

In another embodiment, the washing device is further provided with a blade and a power device, the blade is fixed to the rotary disc and provided for cutting the pet droppings flowing into the rotary disc, the power device is connected to the bottom of the rotary disc to drive the rotary disc and the bottom rotating jet rod to rotate.

In another embodiment, the electromechanical room is provided with a cleaning agent injection device having a container and a solenoid valve, the container is filled with a cleaning agent, the solenoid valve is used to open and close the circulation path of the container connected to the high pressure pipe, when the solenoid valve is opened, the cleaning agent is injected from the container into the high pressure pipe and automatically mixes with high pressure water to form a high pressure cleaning solution.

In another embodiment, a back of the pet room is provided with a warm-keeping device.

In another embodiment, above the house body is further provided a roof room having a ventilator or an air cleaner in communication with the pet room, between the roof room and the pet room is provided a soundproof material, the roof room is defined with a feeding opening and a water inlet for transporting pet food and water to the pet room via a feeding tube and a water supply tube.

The present invention has a high pressure washing device, which can automatically clean the pet activity space and sewage, make the cleaning of the pet house mechanized, so as to save labor and time. In addition, with the ventilator and warm-keeping device, it can provide good ventilation and warm living environment for pets. Moreover, there is a sound insulation device that absorbs or blocks noise and reduces interference from pet calls.

The present invention will become more obvious from the following description when taken in connection with the accompanying drawings, which show, for purpose of illustrations only, the preferred embodiments in accordance with the present invention.

### BRIEF DESCRIPTION OF THE DRAWINGS

Fig. 1 is a perspective view of a multifunctional pet house in accordance with the present invention;
Fig. 2 is a longitudinal cross sectional view of the multifunctional pet house in accordance with the present invention;
Fig. 3 is a perspective view of opening a left gate bar and a right gate bar in accordance with the present invention;
Fig. 4 is a longitudinal cross sectional view of using the multifunctional pet house in accordance with the present invention; and
Fig. 5 is a cross sectional view of Fig. 4 taken along the line A-A.

### DETAILED DESCRIPTION OF THE PREFERRED EMBODIMENTS

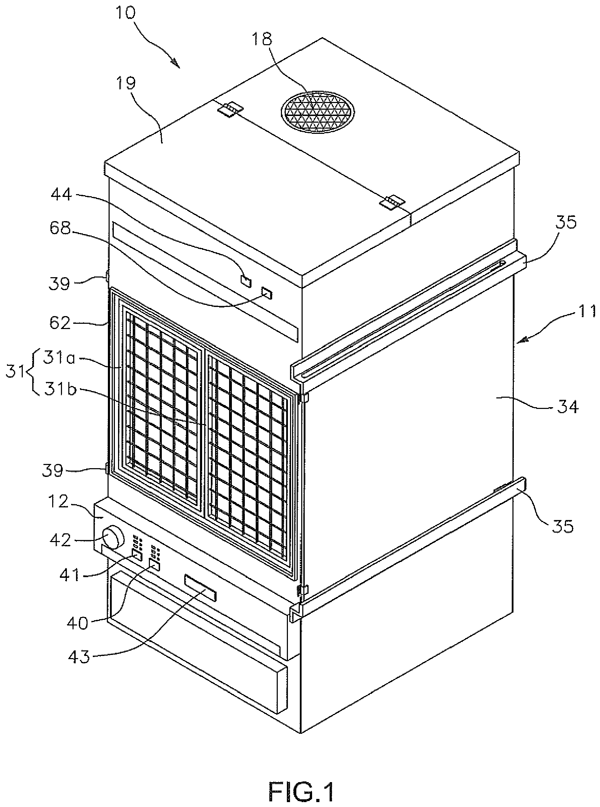

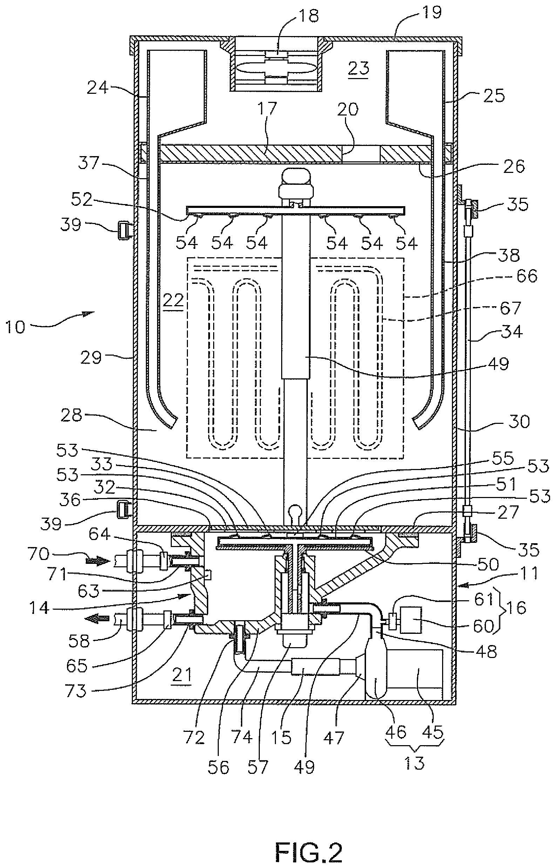

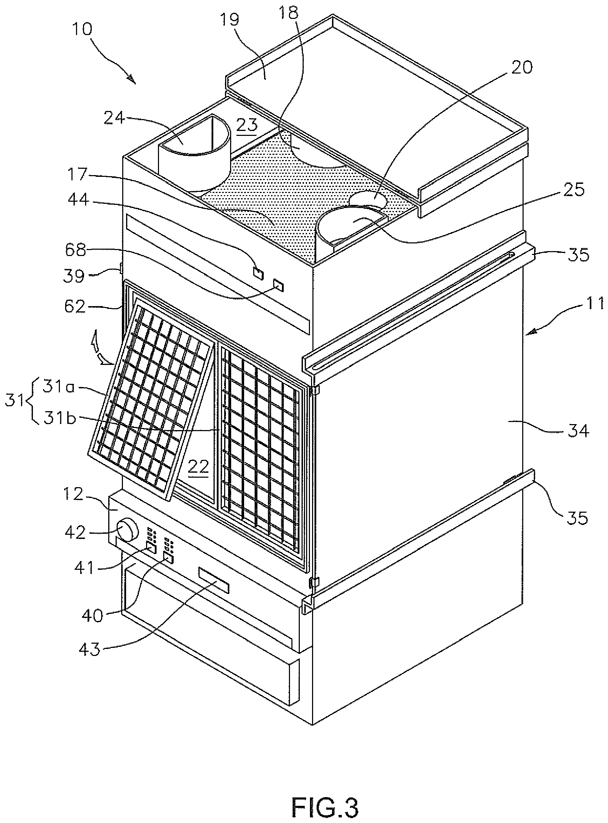

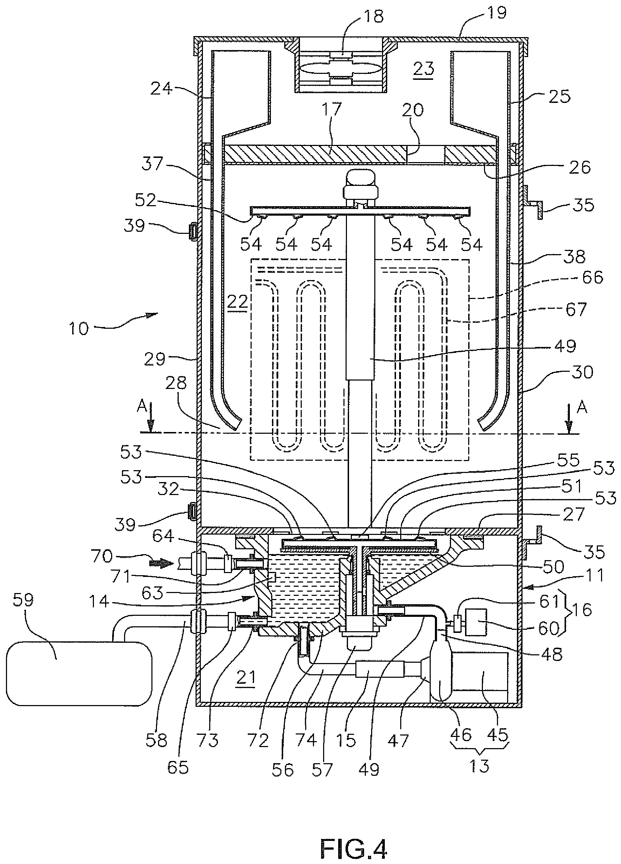

Referring to Figs. 1-3, a multifunctional pet house 10 in accordance with the present invention comprises a house body 11, the shape of the house body 11 is roughly rectangle, and other desired shapes are also available. The interior space of the house body 11 is divided into three layers from bottom to top. The lower layer is an electromechanical room 21 for installation of an electronic controller 12, an electric pump 13, a washing device 14 and other electromechanical equipments. The middle layer is a pet room 22 that is the pet activity space. The upper layer is a roof room 23 with a soundproof material 17, a ventilator 18, a feeding opening 24 and a water inlet 25, etc. The pet room 22 is defined by a ceiling 26, a floor 27, a rear side wall 28, a left side wall 29, a right side wall 30 and a gate assembly 31. The floor 27 slanted toward the center from all sides for easy drainage. The floor 27 is defined with a hole 32 in the center thereof, which is normally covered by a freely loadable hole cover 33 to keep the floor 27 flat and avoid obstructing pet activity; and is removed while cleaning the pet room 22 to expose the washing device 14. The gate assembly 31 consists of a left gate bar 31a and a right gate bar 31b. The right side of the right gate bar 31b is hinged to the house body 11 and is usually locked and opened when necessary. The top of the left gate bar 31a is hinged to the house body 11 so that it can be opened and closed freely (as shown in Fig. 4), which allows the pet to push and open the left gate bar 31a with its own strength and free access to the pet room 22. In addition, the house body 11 has different sizes to suit the pets of different sizes. The height of the electromechanical room 21 will fit in with the design of the size of the house body 11, so that the pet can jump on and off the pet room 22.

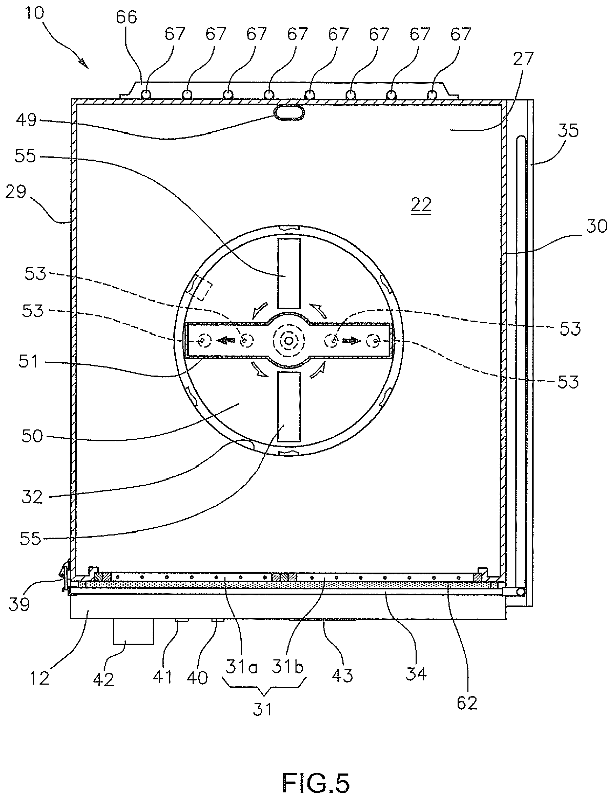

The house body11 also includes a rectangular baffle 34. The top and bottom sides of the baffle 34 are supported on two sliding rails 35 that are fixed to the outer side of the pet room 22 (the figure shows that the sliding rails 35 are arranged on the outer side of the right side wall 30), respectively, so that the baffle 34 can be slidably kept on the outer side of the pet room 22. When the baffle 34 slips forward to the end, it can be turned to the front of the gate assembly 31 to cover the gate assembly 31 (as shown in Fig. 5). A packing 62 which is mounted around the front of the pet room 22 can form an airtight between the gate assembly 31 and a contact surface of the baffle 34, so as to prevent water from spilling out of the pet room 22 through the gridded gate assembly 31 during cleaning, thereby protecting the environment around the pet house 10 from being spattered by water.

The electronic controller 12 is located in the front of the electromechanical room 21, but also can be disposed in other suitable positions of the house body 11, such as the front of the roof room 23. The electronic controller 12 controls the electric pump 13 through the internal program, and a heating device 15 and a cleaning agent injection device 16, etc. The electronic controller 12 includes a power switch 40, a start switch 41, a timer 42 and a display 43. The power switch 40 can be pressed to turn on/off the power. When cleaning starts or stops, the user can press the start switch 41. The timer 42 is used to set the cleaning time instead of the preset cleaning time of the electronic controller 12. The display 43 is used to display the estimated remaining time to the end of the cleaning.

The electric pump 13 is disposed in the electromechanical room 21 and is operated under the control of the electronic controller 12. The electric pump 13 includes a motor 45 for generating rotating power and a pump 46 connected to the kinetic energy of the motor 45 for produce high pressure water. The pump 46 is defined with a water inlet 47 and a water outlet 48.

The washing device 14 includes a rotary disk 50, a bottom rotating jet rod 51 and a top rotating jet rod 52. The rotary disk 50 is rotatably disposed in the electromechanical room 21 and is located below the hole 32 in the floor 27. The bottom rotating jet rod 51 is fixed to the rotary disk 50 and is connected to the water outlet 48 of the pump 46 via a high pressure pipe 49. The bottom rotating jet rod 51 has several nozzles 53 which can respectively spray water toward the surface of the pet room 22. The top rotating jet rod 52 is located above the pet room 22 and supplies water through the high pressure pipe 49. The top rotating jet rod 52 also has several nozzles 54 which can respectively spray water toward the surface of the pet room 22. When high pressure water flows into the bottom rotating jet rod 51 and the top rotating jet rod 52, they will rotate under water pressure, so that the high pressure water can be ejected from the nozzles 53, 54, producing a rotating jet of high pressure water column for washing the surface of the pet room 22, so as to achieve the total cleaning effect with zero dead angle.

In a better embodiment, the washing device 14 also includes a blade 55 that is fixed to the rotary disc 50 and intersects with the bottom rotating jet rod 51 to form a cross shape, so as to cut the pet droppings flowing into the rotary disc 50 by the blade 55, so as to facilitate the discharge with the flow of sewage. The washing device 14 is further provided with a water collecting tank 56 arranged below the rotary disc 50 to hold the water flowing from a water source 70 and the sewage. The water collecting tank 56 is defined with an inlet 71, a discharge outlet 72 and an outlet 73. The inlet 71 is connected to the water source 70, the discharge outlet 72 is connected to the water inlet 47 via a water supply pipe 74, the outlet 73 is provided for discharging sewage. The urine of pets usually flow from an aperture gap 36 between the hole 32 and the hole cover 33 into the rotary disc 50, and then flows into the water collecting tank 56. The water collecting tank 56 controls water intake and drainage by a water level sensor 63, an inlet solenoid valve 64 and an outlet solenoid valve 65. The electronic controller 12 controls the opening and closing of the inlet solenoid valve 64 and the outlet solenoid valve 65 according to the signal given by the water level sensor 63, which makes the water flow into or out of the water collecting tank 56. The rotary disc 50, the bottom rotating jet rod 51 and the blade 55 rotate synchronously and slowly by the high pressure water flowing into the bottom rotating jet rod 51, so the washing device 14 also includes a power device 57 in a preferred embodiment, which can be a motor and connected to the bottom of the rotary disc 50 to drive the rotary disc 50, thereby accelerating the speed of the bottom rotating jet rod 51 and the blade 55 and improving the cleaning efficiency.

In a better embodiment, the heating device 15 of the pet house 10 is arranged on the inflow side of the pump 46, through which the water flowing into the pump 46 is heated, and the pet room 22 is cleaned by hot water. Cleaning with hot water can quickly wash away a lot of dirt and oil stains which are not easy to wash by cold water, greatly improving the cleaning efficiency and achieving high temperature germicidal effect.

In addition, the cleaning agent injection device 16 is disposed in the electromechanical room 21 of the pet house 10, and is provided with a container 60 and a solenoid valve 61. The container 60 is filled with cleaning agent, the solenoid valve 61 is controlled by the electronic controller 12 to open and close the circulation path of the container 60 connected to the high pressure pipe 49. When the solenoid valve 61 is opened, the cleaning agent is injected from the container 60 into the high pressure pipe 49 and automatically mixes with high pressure water to form a high pressure cleaning solution. It is more effective to remove dirt by spraying high pressure cleaning solution from the nozzles 53, 54.

The soundproof material 17 that can absorb or block noise is arranged between the roof room 23 and the ceiling 26 of the pet room 22 to reduce the noise of pets that disturb their own or neighbors' peace. With the feeding opening 24 and the water inlet 25 of the roof room 23, by opening a top cover 19 of the roof room 23, pet food can be fed through the feeding opening 24 and water can be injected into the water inlet 25, so that pet food and water are transported to the pet pot and water basin (not shown) of the pet room 22 via a feeding tube 37 and a water supply tube 38 for pet diet.

In order to provide a good living environment for pets, the pet house 10 also includes the ventilator 18 and a warm-keeping device 66. The ventilator 18 is disposed in the roof room 23, and its air inlet is communicated with the pet room 22 via a vent 20 passing through the soundproof material 17 and the ceiling 26 to remove the dirty air in the pet room 22. Of course, the ventilator 18 can also be upgraded to an air cleaner (the reference symbol 18 also indicates the air cleaner), which makes the air circulate in the pet room 22, and remove or adsorb all kinds of pollutants to achieve the purpose of cleaning and purifying the air in the pet room 22. Through an electric heating element 67 coiled on the back of the rear side wall 28 of the pet room 22, the warm-keeping device 66 raises the temperature of the pet room 22 when the current passes, so that the pet can also remove the cold in the severe winter and keep warm, so that it will not be subjected to cold and freeze. The ventilator 18 and the warm-keeping device 66 control the operation through an exhaust switch 44 and a warm-keeping switch 68 in front of the roof room 23, respectively.

Referring to Figs. 4-5, when cleaning the pet room 22, the hole cover 33 of the pet room 22 is firstly removed to expose the bottom rotating jet rod 51 and the blade 55 of the washing device 14, and then the baffle 34 is slid forward to the end and turned toward the gate assembly 31, until the baffle 34 reaches the front of the gate assembly 31 and is locked by two bolts 39, so as to close the pet room 22. Then the water source 70 is connected to the inlet 71 of the water collecting tank 56, and the power switch 40 and the start switch 41 are pressed successively, so as to connect the power to the electronic controller 12 and start the cleaning procedure. At this time, the inlet solenoid valve 64 opens and the water from the water source 70 begins to flow into the water collecting tank 56. When the water level sensor 63 indicates that the water level of the water collecting tank 56 rises to the predetermined water level, the inlet solenoid valve 64 closes and the motor 45 starts to run, and the pump 46 pumps the water flowing from the water collecting tank 56 to the high pressure pipe 49 after raising the pressure and velocity, so as to make the high pressure water reach the bottom rotating jet rod 51 and the top rotating jet rod 52 with a certain amount of energy. At that time, the bottom rotating jet rod 51 and the top rotating jet rod 52 will rotate in situ under water pressure, and the rotary disc 50 and the blade 55 will rotate synchronously. The high pressure water accelerated by the nozzles 53, 54 forms a jet, which is sprayed on the surface of the pet room 22, so as to remove the dirt attached to the surface of the pet room 22. Then, the sewage flows along the floor 27 into the rotary disc 50 via the hole 32, and finally flows into the water collecting tank 56 for recycling, achieving the goal of saving water. Thus, after a certain period of continuous cleaning with the water from the water collecting tank 56, the electric pump 13 stops running and the outlet solenoid valve 65 is opened, so that the sewage in the water collecting tank 56 will be discharged from the outlet 73 into a sewage tank 59 or the toilet via a drain pipe 58.

When the water level of the water collecting tank 56 drops to the preset water level, the outlet solenoid valve 65 closes and the inlet solenoid valve 64 opens again, which makes the water flow into the water collecting tank 56 again. Then repeat the above cleaning process to carry out the second and third washing and discharging processes. After three times of high pressure washing, the pet room 22 can be washed thoroughly, so that the cleaning work of the pet room 22 can be mechanized, which can save labor and time.

During the first or second washing process, the cleaning agent injection device 16 can be activated to open the solenoid valve 61, so as to inject the cleaning agent from the container 60 into the high pressure pipe 49 and mix the cleaning agent with the high pressure water to form the high pressure cleaning solution, so as to remove the sewage effectively by the high pressure water column, and rinse off the sewage with high pressure water for the last time. As for the heating device 15, the water flowing into the pump 46 can be heated at any or every washing process, so as to clean the pet room 22 by hot water under high pressure, thus thoroughly cleaning and sterilizing. The above washing processes can be achieved by the built-in program of the electronic controller 12.

The time for cleaning the pet room 22 can also be manually adjusted via the timer 42, and is not subjected to the preset time of the electronic controller 12.

While we have shown and described various embodiments in accordance with the present invention, it should be clear to those skilled in the art that further embodiments may be made without departing from the scope of the present invention.

## Claims

1. A multifunctional pet house, comprising:
a house body having an electromechanical room and a pet room located above the electromechanical room, the pet room being provided with a floor and a gate assembly, the floor being defined with a hole in the center thereof, which is normally covered by a loadable hole cover that is removed while cleaning the pet room;
an electronic controller disposed on the house body;
an electric pump disposed in the electromechanical room and operated under the control of the electronic controller and provided with a motor for generating rotating power and a pump connected to the kinetic energy of the motor, the pump being defined with a water inlet and a water outlet; and
a washing device having a rotary disk, a bottom rotating jet rod and a water collecting tank, the rotary disk being rotatably disposed in the electromechanical room and located below the hole in the floor, the bottom rotating jet rod being fixed to the rotary disk and connected to the water outlet of the pump via a high pressure pipe, the bottom rotating jet rod being defined with several nozzles which can respectively spray water toward the surface of the pet room, the water collecting tank being arranged below the rotary disc and defined with an inlet connected to a water source, a discharge outlet connected to the water inlet of the pump and an outlet for discharging sewage, the water collecting tank controls water intake and drainage by a water level sensor, an inlet solenoid valve and an outlet solenoid valve, the electronic controller controls the opening and closing of the inlet solenoid valve and the outlet solenoid valve according to the signal given by the water level sensor, which makes the water flow into or out of the water collecting tank;
when starting the cleaning procedure, the inlet solenoid valve opens and the water from the water source begins to flow into the water collecting tank, when the water level sensor indicates that the water level of the water collecting tank rises to the predetermined water level, the inlet solenoid valve closes and the motor starts to run, and the pump pumps the water flowing from the water collecting tank to the high pressure pipe after raising the pressure and velocity, so as to make the high pressure water reach the bottom rotating jet rod, so as to make the rotary disc rotate synchronously with the bottom rotating jet rod driven by water pressure, the high pressure water accelerated by the nozzles forms a jet, which is sprayed on the surface of the pet room, so as to remove the dirt attached to the surface of the pet room , then, the sewage flows along the floor into the rotary disc via the hole, and finally flows into the water collecting tank for recycling, thus, after a certain period of continuous cleaning with the water from the water collecting tank, the electric pump stops running and the outlet solenoid valve is opened, so that the sewage in the water collecting tank will be discharged from a drain pipe that is connected to the outlet.

2. The multifunctional pet house as claimed in claim 1, wherein the washing device is further provided with a top rotating jet rod that is connected to the high pressure pipe and is defined with several nozzles respectively spray water toward the surface of the pet room.

3. The multifunctional pet house as claimed in claim 1, wherein the house body includes a baffle, the top and bottom sides of the baffle are supported on two sliding rails that are fixed to the outer side of the pet room, respectively, so that the baffle is slidably kept on the outer side of the pet room, when the baffle slips forward to the end, it is turned to the front of the gate assembly to cover the gate assembly, a packing which is mounted around the front of the pet room form an airtight between the gate assembly and a contact surface of the baffle.

4. The multifunctional pet house as claimed in claim 1, wherein the pet house includes a heating device arranged on the inflow side of the pump, through which the water flowing into the pump is heated, and the pet room is cleaned by hot water.

5. The multifunctional pet house as claimed in claim 1, wherein the gate assembly consists of a left gate bar and a right gate bar, a top of the left gate bar or the right gate bar is hinged to the house body, which allows the pet to push and open the left gate bar or the right gate bar with its own strength and free access to the pet room.

6. The multifunctional pet house as claimed in claim 1, wherein the washing device is further provided with a blade, the blade is fixed to the rotary disc and provided for cutting the pet droppings flowing into the rotary disc.

7. The multifunctional pet house as claimed in claim 1, wherein the washing device is further provided with a power device, the power device is connected to the bottom of the rotary disc to drive the rotary disc and the bottom rotating jet rod to rotate.

8. The multifunctional pet house as claimed in claim 1, wherein the electronic controller includes a power switch, a start switch, a timer and a display.

9. The multifunctional pet house as claimed in claim 1, wherein the electromechanical room is provided with a cleaning agent injection device having a container and a solenoid valve, the container is filled with a cleaning agent, the solenoid valve is used to open and close the circulation path of the container connected to the high pressure pipe, when the solenoid valve is opened, the cleaning agent is injected from the container into the high pressure pipe and automatically mixes with high pressure water to form a high pressure cleaning solution.

10. The multifunctional pet house as claimed in claim 1, wherein a back of the pet room is provided with a warm-keeping device.

11. The multifunctional pet house as claimed in claim 1, wherein above the house body is further provided a roof room having a ventilator or an air cleaner in communication with the pet room.

12. The multifunctional pet house as claimed in claim 1, wherein above the house body is further provided a roof room, between the roof room and the pet room is provided a soundproof material.

13. The multifunctional pet house as claimed in claim 1, wherein above the house body is further provided a roof room, the roof room is defined with a feeding opening and a water inlet for transporting pet food and water to the pet room via a feeding tube and a water supply tube.
